# EUROPÄISCHE PATENTANMELDUNG

(11) **EP 3 672 053 A1**
(43) Veröffentlichungstag der Anmeldung: **24.06.2020**
(21) Anmeldenummer: 18213081.5
(22) Anmeldetag: 17.12.2018
(51) Int. Cl.: H02M 3/335, H02M 1/00

(54) **STEUERVERFAHREN FÜR EINEN DUAL ACTIVE BRIDGE SERIENRESONANZWANDLER UND NACH DEM VERFAHREN ARBEITENDER DUAL ACTIVE BRIDGE SERIENRESONANZWANDLER**

(71) Anmelder: Siemens Aktiengesellschaft, 80333 München (DE)
(72) Erfinder: Lutze, Marcel, 90459 Nürnberg (DE); Zatocil, Heiko, 90469 Nürnberg (DE)

(57) **Zusammenfassung**

Die Erfindung ist ein Steuerverfahren für einen Leistungshalbleiter (14,18) umfassenden Dual Active Bridge Serienresonanzwandler (10) und ein nach dem Verfahren arbeitender Dual Active Bridge Serienresonanzwandler (10), wobei die Leistungshalbleiter (14,18) mittels eines Modulators (26) mit einer Ansteuerfrequenz f und/oder einer Phasenverschiebung ϕ angesteuert werden, wobei die Ansteuerfrequenz f und/oder eine Vorsteuergröße ϕᵥ für eine Phasenverschiebung ϕ mittels einer Look-Up-Tabelle (40) ermittelt werden, wobei die Look-Up-Tabelle (40) dafür zumindest einen Datensatz (54) mit mittels eines Verlustleistungsmodells vorberechneten Daten umfasst und wobei der Look-Up-Tabelle (40) als Eingangsparameter eine Eingangsspannung U_{E}, eine gewünschte Ausgangsspannung U_{A} und eine Ausgangsleistung P zugeführt werden.

## Beschreibung

Die Erfindung betrifft ein Steuerverfahren für einen Dual Active Bridge Serienresonanzwandler sowie einen nach dem Verfahren arbeitenden Dual Active Bridge Serienresonanzwandler.

Bei einem in Folgenden kurz als Serienresonanzwandler bezeichneten Dual Active Bridge Serienresonanzwandler können ein Leistungsfluss und ein Verhältnis zwischen einer Eingangsspannung und einer Ausgangsspannung über einzelne Stellgrößen geregelt werden. Bei den Stellgrößen handelt es sich um eine Übertragungsfrequenz, eine Phasenverschiebung der Phasenspannungen und einen Aussteuergrad der Vollbrücken. Je nach Wahl konkreter Werte für die Stellgrößen stellen sich unterschiedliche Verluste in den Leistungshalbleitern der Vollbrücken ein.

Eine Aufgabe der vorliegenden Findung besteht darin, ein Steuerverfahren für einen Serienresonanzwandler der eingangs genannten Art sowie einen nach dem Steuerverfahren arbeitenden Serienresonanzwandler anzugeben, bei dem die Verluste in den Leistungshalbleitern (Verlustleistung) reduziert sind.

Diese Aufgabe wird erfindungsgemäß mittels eines Steuerverfahrens für einen Serienresonanzwandler (Dual Active Bridge Serienresonanzwandler) mit den Merkmalen des Anspruchs 1 gelöst. Der Serienresonanzwandler umfasst - in grundsätzlich an sich bekannter Art und Weise - eine eingangsseitige und eine ausgangsseitige Brückenschaltung. Jede Brückenschaltung umfasst jeweils Leistungshalbleiter, welche mittels eines Modulators mit einer Ansteuerfrequenz f und/oder einer Phasenverschiebung angesteuert werden. Nach dem hier vorgeschlagenen Steuerverfahrens ist vorgesehen, dass die Ansteuerfrequenz f und/oder eine Vorsteuergröße ϕᵥ für die Phasenverschiebung ϕ mittels einer Look-Up-Tabelle ermittelt werden und dass der Look-Up-Tabelle als Eingangsparameter eine Eingangsspannung U_{E}, eine gewünschte Ausgangsspannung U_{A} und eine gewünschte (in grundsätzlich an sich bekannter Art und Weise von der gewünschten Ausgangsspannung U_{A} und der angeschlossenen Last abhängige) Ausgangsleistung P zugeführt werden.

Auf Basis dieser Eingangsparameter oder entsprechender Eingangssignale erfolgt automatisch mittels der Look-Up-Tabelle eine Ermittlung einer passenden Ansteuerfrequenz f und/oder einer passenden Vorsteuergröße ϕᵥ für die Phasenverschiebung ϕ. Die mittels der Look-Up-Tabelle ermittelten Werte gewährleisten nicht nur den Erhalt der gewünschte Ausgangsspannung U_{A} bei der jeweiligen Ausgangsleistung P, sondern gewährleisten dies bei gleichzeitiger Minimierung - zumindest bei einer gleichzeitigen Reduzierung - der Verlustleistung in den Leistungshalbleitern.

Die von der Look-Up-Tabelle umfassten Daten sind vorab, also zeitlich bevor der Serienresonanzwandler zur Erzeugung einer gewünschten Ausgangsspannung U_{A} betrieben wird, ermittelt worden, zum Beispiel mittels eines Verlustleistungsmodells berechnet worden (off-line). Die Daten der Look-Up-Tabelle stehen damit beim Betrieb des Serienresonanzwandlers unmittelbar zur Verfügung (on-line) und die Verwendung einer Look-Up-Tabelle vermeidet einen ansonsten beinahe unvermeidlichen Zeitverzug bis zur Ermittlung der Ansteuerfrequenz f und/oder der Vorsteuergröße ϕᵥ für die Phasenverschiebung ϕ.

Bezüglich einer nach dem Steuerverfahren arbeitenden Vorrichtung, nämlich einem nach dem Steuerverfahren arbeitenden Serienresonanzwandler (Dual Active Bridge Serienresonanzwandler), wird die genannte Aufgabe gelöst durch die Merkmale des parallelen Vorrichtungsanspruchs. Bei einem solchen Serienresonanzwandler mit einer eingangsseitigen und einer ausgangsseitigen, jeweils Leistungshalbleiter umfassenden Brückenschaltung und mit einem zur Ansteuerung der Leistungshalbleiter bestimmten Modulator sind die Leistungshalbleiter mittels des Modulators mit einer Ansteuerfrequenz f und/oder einer Phasenverschiebung ϕ ansteuerbar, wobei die Ansteuerfrequenz f und/oder eine Vorsteuergröße ϕᵥ für die Phasenverschiebung ϕ mittels einer Look-Up-Tabelle ermittelbar sind und die Look-Up-Tabelle ist mit einer am Serienresonanzwandler anliegenden Eingangsspannung U_{E}, einer gewünschten Ausgangsspannung U_{A} und einer zugehörigen Ausgangsleistung P oder entsprechenden Eingangsparametern beaufschlagbar.

Für die weitere Beschreibung gilt zur Vermeidung unnötiger Wiederholungen, dass Merkmale und Details, die im Zusammenhang mit dem genannten Steuerverfahren zum Betrieb eines Serienresonanzwandlers (Dual Active Bridge Serienresonanzwandler) sowie eventueller Ausgestaltungen beschrieben sind, selbstverständlich auch im Zusammenhang mit und im Hinblick auf einen zur Durchführung des Verfahrens eingerichteten Serienresonanzwandler (Dual Active Bridge Serienresonanzwandler) und umgekehrt gelten. Dementsprechend kann das Verfahren auch mittels einzelner oder mehrerer Verfahrensmerkmale fortgebildet sein, die sich auf Verfahrensschritte beziehen, die von dem Serienresonanzwandler ausgeführt werden, und der Serienresonanzwandler kann ebenso durch Mittel zur Ausführung von im Rahmen des Steuerverfahrens ausgeführten Verfahrensschritten fortgebildet sein. Folglich gelten Merkmale und Details, die im Zusammenhang mit dem genannten Steuerverfahren und eventueller Ausgestaltungen beschrieben sind, selbstverständlich auch im Zusammenhang mit und im Hinblick auf einen zur Ausführung des Verfahrens eingerichteten Serienresonanzwandler und umgekehrt, so dass bezüglich der Offenbarung zu den einzelnen Aspekten der Erfindung stets wechselseitig Bezug genommen wird bzw. werden kann.

Ein Vorteil der Erfindung besteht zum Beispiel darin, dass sich die Verlustleistung bei einem Dual Active Bridge Serienresonanzwandler, genauer: einem einstufigen Dual Active Bridge DC-DC Wandlern mit Serienresonanzkreis, so weit reduzieren lässt, dass diese in Applikationen, in denen zuvor nur zweistufige DC-DC Wandler mit größerem Bauraum und größerem Bauteilaufwand Anwendung fanden, eingesetzt werden können. Geräte mit Serienresonanzwandlern der hier vorgeschlagenen Art können damit kostengünstiger und kleiner gebaut werden.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Steuerverfahrens / des gegenständlichen Serienresonanzwandlers nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens sowie einer Ausführungsform des nach dem Verfahren arbeitenden Serienresonanzwandlers umfasst die Look-Up-Tabelle für verschiedene, jeweils durch eine Eingangsspannung U_{E} und die gewünschte Ausgangsspannung U_{A} bestimmte Arbeitspunkte des Serienresonanzwandlers jeweils einen Datensatz und aus einer Mehrzahl von Datensätzen wird anhand der Eingangsspannung U_{E} sowie der gewünschten Ausgangsspannung U_{A} genau ein Datensatz ausgewählt. Anhand des ausgewählten Datensatzes ergeben sich dann die Ansteuerfrequenz f und/oder die Vorsteuergröße ϕᵥ für die Phasenverschiebung ϕ. Damit ist das Verfahren auch für unterschiedliche Eingangs- und Ausgangsspannungskombinationen verwendbar und der Serienresonanzwandler ist nach dem hier vorgeschlagenen Ansatz mit unterschiedlichen Eingangs- und Ausgangsspannungskombinationen betreibbar.

Bei einer besonders bevorzugten Ausführungsform des Verfahrens sowie einer besonders bevorzugten Ausführungsform des nach dem Verfahren arbeitenden Serienresonanzwandlers wird die Phasenverschiebung ϕ mittels eines Ausgangsspannungsreglers geregelt. Dafür wird mittels eines Ausgangssignals ϕ_{R} des Ausgangsspannungsreglers die auf der Vorsteuergröße ϕᵥ basierende Phasenverschiebung ϕ verändert, also entsprechend dem Ausgangssignal ϕ_{R} erhöht oder reduziert. Dem Ausgangsspannungsregler wird dafür eingangsseitig eine Differenz aus der gewünschten Ausgangsspannung U_{A} und einer tatsächlichen Ausgangsspannung zugeführt. Der Ausgangsspannungsregler gewährleistet also den tatsächlichen Erhalt der gewünschten Ausgangsspannung U_{A}. Ohne einen solchen Ausgangsspannungsregler wird die mittels der Look-Up-Tabelle ermittelte Vorsteuergröße ϕᵥ für die Phasenverschiebung ϕ unmittelbar als Phasenverschiebung ϕ angewendet.

Die oben genannte Aufgabe wird auch mit einer Steuerungseinrichtung zur Steuerung eines Serienresonanzwandlers (Dual Active Bridge Serienresonanzwandler) gelöst, welche bei einer Ausführung des Steuerverfahrens wie hier und im Folgenden beschrieben arbeitet und dazu Mittel zur Ausführung des Steuerverfahrens umfasst. Das Steuerverfahren ist zur automatischen Ausführung bevorzugt zumindest zum Teil in Form eines von der Steuerungseinrichtung ausgeführten Steuerungsprogramms (Computerprogramm) realisiert und das Steuerungsprogramm ist eine Implementierung des gegenständlichen Verfahrens zum Betrieb des Serienresonanzwandlers in Software. Die Erfindung ist damit einerseits auch ein Steuerungsprogramm mit durch einen Mikroprozessor oder dergleichen ausführbaren Programmcodeanweisungen und andererseits ein Speichermedium mit einem derartigen Steuerungsprogramm, also ein Computerprogrammprodukt mit Programmcodemitteln. Die Erfindung ist schließlich auch ein Serienresonanzwandler (eine Serienresonanzwandlerschaltung) mit einer Steuerungseinrichtung, wobei die Steuerungseinrichtung eine Verarbeitungseinheit in Form von oder nach Art eines Mikroprozessors sowie einen Speicher aufweist und wobei in den Speicher als Mittel zur Durchführung des Steuerverfahrens und seiner Ausgestaltungen ein solches Steuerungsprogramm geladen oder ladbar ist.

Wenn im Folgenden Verfahrensschritte oder Verfahrensschrittfolgen des Steuerverfahrens beschrieben werden, bezieht sich dies auf Aktionen, die bei einer Implementation des hier vorgeschlagenen Ansatzes in Software beispielsweise aufgrund des Steuerungsprogramms oder unter Kontrolle des Steuerungsprogramms erfolgen. Insofern bedeutet jede Verwendung des Begriffs "automatisch", dass die betreffende Aktion zum Beispiel aufgrund des Steuerungsprogramms oder unter Kontrolle des Steuerungsprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen Dual Active Bridge Serienresonanzwandler,
- FIG 2: eine schematisch vereinfachte Darstellung des hier vorgeschlagenen Steuerverfahrens sowie eine dabei verwendete Look-Up-Tabelle und
- FIG 3: das Ergebnis einer Berechnung, welche eine Basis für von der Look-Up-Tabelle umfasste Daten bildet.

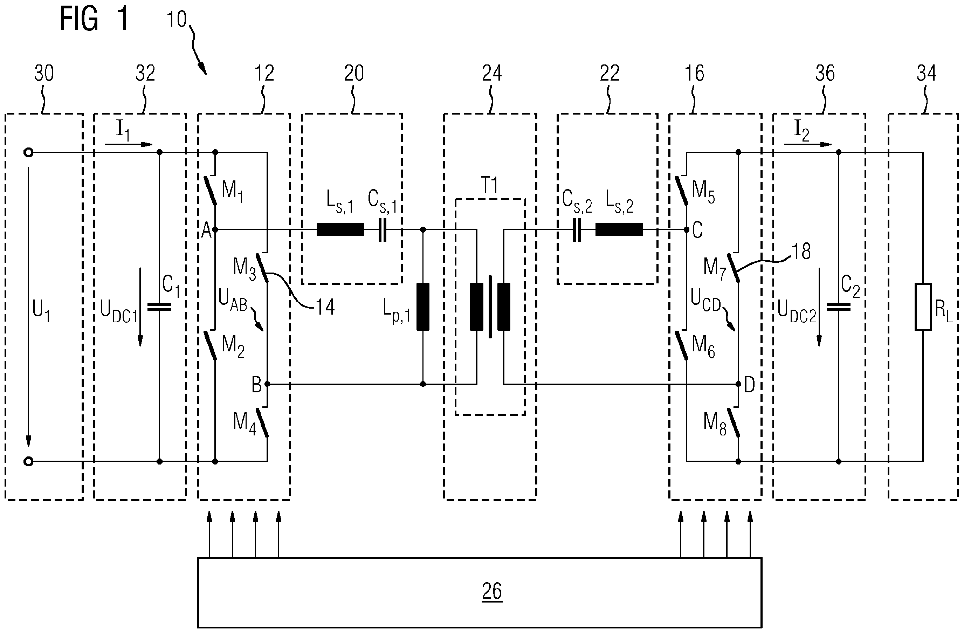

FIG 1 zeigt eine exemplarische Ausführungsform eines im Folgenden kurz als Serienresonanzwandler 10 bezeichneten Dual Active Bridge Serienresonanzwandlers 10. Dieser umfasst eine eingangsseitige Brückenschaltung 12 (Vollbrücke oder H-Brücke) mit in grundsätzlich an sich bekannter Art und Weise als Schalter fungierenden Leistungshalbleitern 14 (nur einer bezeichnet) sowie eine ausgangsseitige Brückenschaltung 16 (Vollbrücke oder H-Brücke) mit ebenfalls als Schalter fungierenden Leistungshalbleitern 18 (ebenfalls nur einer bezeichnet). Des Weiteren umfasst der Serienresonanzwandler 10 einen eingangsseitigen Serienschwingkreis 20, einen ausgangsseitigen Serienschwingkreis 22 und einen Transformator 24 zur Leistungsübertragung sowie eine zum Transformator 24 parallele Induktivität. Die Leistungshalbleiter 14, 18 (Leistungshalbleiterschalter) sind in FIG 1 schematisch vereinfacht als ideale Schalter gezeigt.

Jede Brückenschaltung 12, 16, also die eingangsseitige Brückenschaltung 12 und die ausgangsseitige Brückenschaltung 16, genauer gesagt deren Leistungshalbleiter 14, 18, werden mittels eines Modulators 26 (oder mittels jeweils eines Modulators) angesteuert. Die in FIG 1 von dem Modulator 26 ausgehenden und in Richtung auf jeweils eine Brückenschaltung 12, 16 weisenden Pfeile veranschaulichen Steuersignale zur Ansteuerung jeweils eines Leistungshalbleiters 14, 18.

Eine Häufigkeit und eine Abfolge der Steuersignale ergibt sich aufgrund einer Ansteuerfrequenz f, mit der die Steuersignale ausgegeben werden, sowie aufgrund eines zeitlichen Versatzes - einer Phasenverschiebung ϕ -, mit der bzw. dem die Steuersignale ausgegeben werden. Die Ansteuerfrequenz f bestimmt die Signalform und die Übertragungsfrequenz der aufgrund der Schaltzustände der Leistungshalbleiter 14, 18 resultierenden elektrische Größen, nämlich der Phasenströme und der Phasenspannungen. Die Phasenverschiebung ϕ bestimmt den zeitlichen Versatz (Phasenverschiebung) des Verlaufs dieser aufgrund der Schaltzustände der Leistungshalbleiter 14, 18 resultierenden elektrischen Größen. Die Ansteuerfrequenz f und die Übertragungsfrequenz des Serienresonanzwandlers 10 bedingen sich gegenseitig. Insofern kann auch formuliert werden, dass die Leistungshalbleiter 14, 18 mit einer zu einer gewünschten Übertragungsfrequenz führenden Ansteuerfrequenz f angesteuert werden. Gleiches gilt entsprechend für die Phasenverschiebung ϕ. Auch hier kann formuliert werden, dass die Leistungshalbleiter 14, 18 mit einem zu einer gewünschten Phasenverschiebung ϕ der Phasenströme und Phasenspannungen führenden zeitlichen Versatz angesteuert werden. In diesem Sinne werden im Folgenden die Begriffe Ansteuerfrequenz f und Phasenverschiebung ϕ gebraucht. Die Ansteuerfrequenz f bestimmt die zeitliche Abfolge der Steuersignale und daraus ergibt sich die Übertragungsfrequenz. Entsprechend bestimmt die Phasenverschiebung ϕ die zeitliche Verteilung der Steuersignale und daraus ergibt sich die Phasenverschiebung ϕ der Phasenspannungen. Allgemein bestimmt die Ansteuerfrequenz f die Ansteuerung der Leistungshalbleiter 14, 18 der eingangsseitigen Brückenschaltung 12 sowie der ausgangsseitige Brückenschaltung 16 und die Phasenverschiebung ϕ bestimmt eine Phasenverschiebung zwischen der Ansteuerung der Leistungshalbleiter 14 der eingangsseitigen Brückenschaltung 12 und der Leistungshalbleiter 18 der ausgangsseitigen Brückenschaltung 16.

Eingangsseitig liegt an dem Serienresonanzwandler 10 eine Eingangsspannung U₁, zum Beispiel die Spannung einer eingangsseitigen Spannungsquelle 30, an und an einem eingangsseitigen Zwischenkreis 32 liegt die eingangsseitige Zwischenkreisgleichspannung U_{DC1} an. Ausgangsseitig ist an den Serienresonanzwandler 10 eine Last 34 angeschlossen. Die Last 34 wird mittels einer über einem ausgangsseitigen Zwischenkreis 36 abgreifbaren ausgangsseitigen Zwischenkreisgleichspannung U_{DC2} gespeist. Die eingangsseitige Zwischenkreisgleichspannung U_{DC1} wird im Folgenden als Eingangsspannung des Serienresonanzwandlers 10 bezeichnet. Die ausgangsseitige Zwischenkreisgleichspannung U_{DC2} wird im Folgenden entsprechend als Ausgangsspannung des Serienresonanzwandlers 10 bezeichnet.

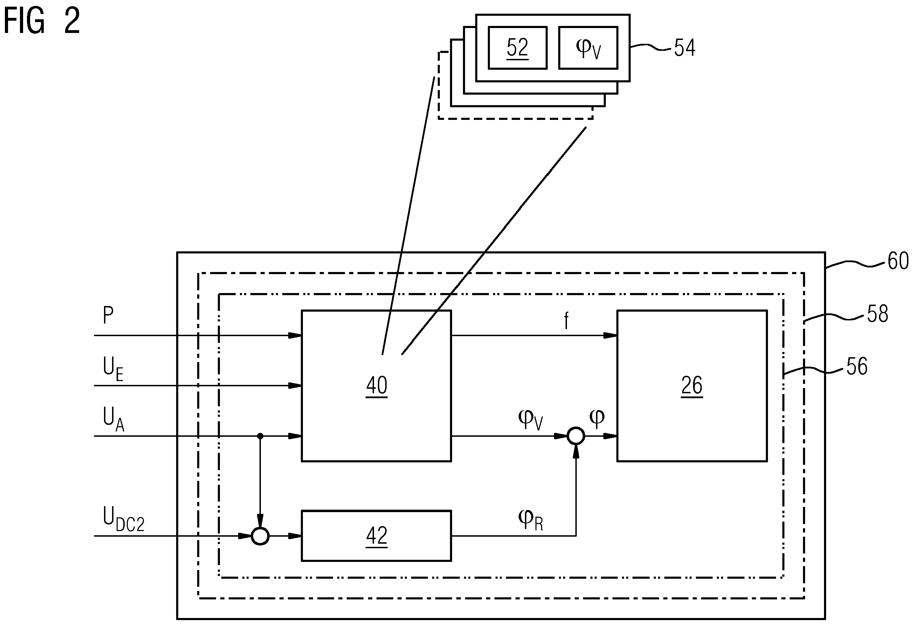

FIG 2 zeigt eine schematisch vereinfachte Darstellung des hier vorgeschlagenen Steuerverfahrens zum Betrieb eines Serienresonanzwandlers 10, insbesondere eines Serienresonanzwandlers 10 gemäß FIG 1. Mittels einer Look-Up-Tabelle 40 werden automatisch zumindest eine Ansteuerfrequenz f und optional eine Ansteuerfrequenz f sowie eine Vorsteuergröße ϕᵥ für eine Phasenverschiebung ϕ zur Ansteuerung der Leistungshalbleiter 14, 18 im oben genannten Sinne ausgewählt.

Der konkrete Wert für die jeweils geltende Phasenverschiebung ϕ ergibt sich im Falle einer aus der Look-Up-Tabelle 40 erhältlichen Vorsteuergröße ϕᵥ für die Phasenverschiebung ϕ mit dieser Vorsteuergröße ϕᵥ sowie mit einem Ausgangssignal ϕ_{R} eines im Folgenden kurz als Spannungsregler 42 bezeichneten Ausgangsspannungsreglers 42, zum Beispiel durch Addition: ϕ = ϕᵥ + ϕ_{R}. Im Falle einer aus der Look-Up-Tabelle 40 nicht erhältlichen Vorsteuergröße ϕᵥ ergibt sich die Phasenverschiebung ϕ unmittelbar aufgrund des Ausgangssignals ϕ_{R} des Ausgangsspannungsreglers 42.

Dem Spannungsregler 42 wird an dessen Eingang als Führungsgröße für die Regelung die Differenz aus der tatsächlichen Ausgangsspannung U_{DC2} und einer gewünschten Ausgangsspannung (Sollausgangsspannung U_{A}) zugeführt. Der Spannungsregler 42 gibt an seinem Ausgang als Stellgröße einen Korrekturwert ϕ_{R} für die Phasenverschiebung aus. Der Spannungsregler 42 ist zum Beispiel als PI-Regler oder als PID-Regler realisiert.

Die Auswahl der Ansteuerfrequenz f für die Ansteuerung der Leistungshalbleiter 14, 18 oder die Auswahl der Vorsteuergröße ϕᵥ für die Phasenverschiebung ϕ sowie der Ansteuerfrequenz f für die Ansteuerung der Leistungshalbleiter 14, 18 erfolgt mittels der Look-Up-Tabelle 40 anhand der (vorgegebenen oder vorgebbaren) Sollausgangsspannung U_{A}, einer zugehörigen Ausgangsleistung P und einer jeweiligen Eingangsspannung U_{E}, wobei die Eingangsspannung U_{E} der eingangsseitigen Zwischenkreisgleichspannung U_{DC1} entspricht.

Die Eingangsspannung U_{E}, die Sollausgangsspannung U_{A} und die Ausgangsleistung P sind Eingangssignale/-parameter für die Look-Up-Tabelle 40. Die Eingangsspannung U_{E} und die Sollausgangsspannung U_{A} werden zum Beispiel mittels einer grundsätzlich an sich bekannten Sensorik innerhalb der Schaltung des Serienresonanzwandlers 10 erfasst, die Eingangsspannung U_{E} also zum Beispiel mittels eines (grundsätzlich an sich bekannten) Messumformers zur Erzeugung eines zur Eingangsspannung U_{E} proportionalen Signals und die Ausgangsleistung P mittels eines (ebenfalls grundsätzlich an sich bekannten) Messumformers zur Erzeugung eines zur Ausgangsleistung P proportionalen Signals. Bei einer Verwendung einer solchen Sensorik werden die damit erhältlichen Signale der Look-Up-Tabelle 40 als Eingangssignale zugeführt. Die Ausgangsleistung P kann auf Basis solcher Signale in üblicher Art und Weise berechnet werden.

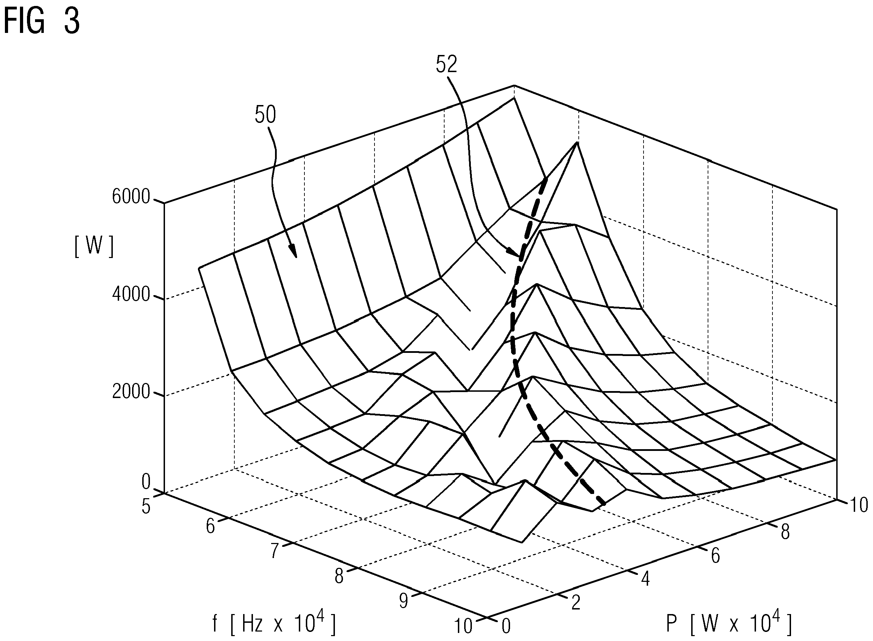

Die von der Look-Up-Tabelle 40 umfassten Werte sind vorab anhand eines bekannten Verlustleistungsmodells berechnet und FIG 3 zeigt das Ergebnis einer beispielhaften Berechnung für genau einen Arbeitspunkt. Der Arbeitspunkt wird durch eine jeweilige Eingangsspannung U_{E} sowie eine jeweils gewünschte Sollausgangsspannung U_{A} vorgegeben. Für zumindest einen Arbeitspunkt und bevorzugt für jeden in Betracht kommenden Arbeitspunkt wird mittels des Verlustleistungsmodells für verschiedene Ansteuerfrequenzen f und für verschiedene Ausgangsleistungen P eine jeweilige Verlustleistung ermittelt. FIG 3 zeigt das Ergebnis einer solchen Berechnung für den folgenden Arbeitspunkt: Eingangsspannung U_{E} = 500 V, Sollausgangsspannung U_{A} = 750 V. Auf der x-Achse ist die Ansteuerfrequenz f abgetragen. Auf der y-Achse ist die Ausgangsleistung P abgetragen. Auf der z-Achse ist die bei dem Arbeitspunkt und bei der jeweiligen Ansteuerfrequenz f sowie Ausgangsleistung P resultierende Verlustleistung abgetragen.

In FIG 3 ist auf der anhand des Verlustleistungsmodells für den konkreten Arbeitspunkt resultierenden Fläche 50 eine Trajektorie 52 eingezeichnet. Die Trajektorie 52 ergibt sich (für den jeweiligen konkreten Arbeitspunkt) anhand eines vorgegebenen oder vorgebbaren Ausschaltstroms bei der Ansteuerung der Leistungshalbleiter 14, 18, zum Beispiel einem Ausschaltstrom von 50 A. Der berücksichtigte Ausschaltstrom führt dazu, dass die Trajektorie 52 unterhalb des Verlaufs der lokalen Maxima der Fläche 50 sowie oberhalb idealer Minima liegt. Bei der Bildung des Inhalts der Look-Up-Tabelle 40 kann optional ein gewisser primär- und/oder sekundärseitiger Ausschaltstrom berücksichtigt werden.

Grundsätzlich ist die Trajektorie 52 das Ergebnis einer Optimierung auf eine vorgegebene oder vorgebbare Zielfunktion, nämlich eine Zielfunktion, welche zum Beispiel den Ausschaltstrom beinhaltet.

Die Look-Up-Tabelle 40 umfasst als Daten die Daten zumindest einer solchen Trajektorie 52, zum Beispiel in Form von Daten einzelner Stützstellen der Trajektorie 52. In FIG 2 ist dies symbolisch mittels eines von der Look-Up-Tabelle 40 umfassten Datensatzes 54 gezeigt, welcher seinerseits jeweils die Daten einer Trajektorie 52 sowie eine Vorsteuergröße ϕᵥ für die Phasenverschiebung ϕ umfasst. Ein einzelner derartiger Datensatz 54 ist mit genau einem Arbeitspunkt verbunden. Bevorzugt umfasst die Look-Up-Tabelle 40 mehrere derartige Datensätze 54. Dann ist jeder einzelne Datensatz 54 jeweils mit einem Arbeitspunkt verbunden und die Auswahl genau eines Datensatzes 54 aus der Gesamtheit der Datensätze 54 erfolgt anhand der Daten des Arbeitspunkts, also anhand der jeweiligen Eingangsspannung U_{E} und der gewünschten Sollausgangsspannung U_{A}.

Im Wege der Auswahl genau eines Datensatzes 54 aus der Gesamtheit der Datensätze 54 fungiert die Look-Up-Tabelle 40 in grundsätzlich an sich bekannter Art und Weise ein erstes Mal als Look-Up-Tabelle 40. Hier werden die zu dem Arbeitspunkt gehörige Trajektorie 52 und die zu dem Arbeitspunkt gehörige Vorsteuergröße ϕᵥ für die Phasenverschiebung ϕ ermittelt. Ein zweites Mal fungiert die Look-Up-Tabelle 40 (ebenfalls in grundsätzlich an sich bekannter Art und Weise) als Look-Up-Tabelle 40, wenn anhand der als Eingangssignal/-parameter zugeführten Ausgangsleistung P sowie der zuvor ausgewählten Trajektorie 52 die nach dem zugrunde liegenden Verlustleistungsmodell optimale Ansteuerfrequenz f ermittelt wird. Bei einer Look-Up-Tabelle 40 mit einer Mehrzahl von Datensätzen 54 erfolgt optional in grundsätzlich an sich bekannter Art und Weise eine Interpolation, also eine Interpolation zwischen zwei Vorsteuergrößen ϕᵥ für die Phasenverschiebung ϕ und/oder eine Interpolation zwischen den beiden anhand von zwei Trajektorien 52 resultierenden Ansteuerfrequenzen f.

Nach der Auswahl einer Ansteuerfrequenz f und einer Vorsteuergröße ϕᵥ für die Phasenverschiebung ϕ werden die Ansteuerfrequenz f und die Vorsteuergröße ϕᵥ für die Phasenverschiebung ϕ an den Modulator 26 übergeben. Der Modulator 26 bewirkt - wie bereits beschrieben - die Ansteuerung der von den Brückenschaltungen 12, 16 umfassten Leistungshalbleiter 14, 18 mit der ermittelten Ansteuerfrequenz f und zumindest anfänglich mit der ermittelten Vorsteuergröße ϕᵥ für die Phasenverschiebung ϕ. Sobald sich aufgrund dieser Ansteuerung eine Ausgangsspannung einstellt, die zum Beispiel in Form der Zwischenkreisgleichspannung U_{DC2} erfasst wird, passt der Spannungsregler 42 die Phasenverschiebung ϕ in Abhängigkeit von einer Abweichung der tatsächlichen Ausgangsspannung von der gewünschten Sollausgangsspannung U_{A} an.

Die Look-Up-Tabelle 40 und/oder der Spannungsregler 42 und/oder der Modulator 26 sind zum Beispiel in Form eines Steuerungsprogramms 56 (FIG 2) in Soft- und/oder Firmware realisiert und in einen entsprechenden Speicher 58 (FIG 2) einer Steuerungseinrichtung 60 geladen. Eine solche Steuerungseinrichtung 60 ist zum Beispiel Bestandteil der Schaltung des Serienresonanzwandlers 10, insbesondere einer Schaltung gemäß FIG 1, und Ausgangssignale der Steuerungseinrichtung 60, nämlich Ausgangssignale des von der Steuerungseinrichtung 60 umfassten Modulators 26, bewirken die Ansteuerung der Leistungshalbleiter 14, 18 des Serienresonanzwandlers 10.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Steuerverfahren für einen Leistungshalbleiter 14, 18 umfassenden Dual Active Bridge Serienresonanzwandler 10 und ein nach dem Verfahren arbeitender Dual Active Bridge Serienresonanzwandler 10. Die Leistungshalbleiter 14, 18 des Dual Active Bridge Serienresonanzwandlers 10 werden mittels eines Modulators 26 angesteuert und zwar mit vom Modulator 26 ausgegebenen Steuersignalen. Eine Häufigkeit und eine Abfolge der Steuersignale ergibt sich aufgrund einer Ansteuerfrequenz f, mit der die Steuersignale ausgegeben werden, sowie aufgrund eines zeitlichen Versatzes - einer Phasenverschiebung ϕ -, mit der bzw. dem die Steuersignale ausgegeben werden. Die Ansteuerfrequenz f bestimmt die Signalform und die Übertragungsfrequenz der aufgrund der Schaltzustände der Leistungshalbleiter 14, 18 resultierenden elektrischen Größen, nämlich der Phasenströme und der Phasenspannungen. Die Phasenverschiebung ϕ bestimmt den zeitlichen Verlauf dieser aufgrund der Schaltzustände der Leistungshalbleiter 14, 18 resultierenden elektrischen Größen. Die Ansteuerfrequenz f und/oder eine Vorsteuergröße ϕᵥ für eine Phasenverschiebung ϕ werden mittels einer Look-Up-Tabelle 40 ermittelt. Diese umfasst dafür zumindest einen Datensatz 54 mit mittels eines Verlustleistungsmodells vorberechneten Daten und die Look-Up-Tabelle 40 wird zur Auswahl und zur Ausgabe einer Ansteuerfrequenz f und/oder einer Vorsteuergröße ϕᵥ für die Phasenverschiebung ϕ mit einer Eingangsspannung U_{E}, einer gewünschten Ausgangsspannung U_{A} und einer gewünschten (aufgrund der Ausgangsspannung U_{A} und der jeweiligen Last 34 gegebenen) Ausgangsleistung P beaufschlagt.

## Patentansprüche

1. Verfahren zum Betrieb eines Serienresonanzwandlers (10), welcher eine eingangsseitige und eine ausgangsseitige, jeweils Leistungshalbleiter (14,18) umfassende Brückenschaltung (12,16) aufweist, welche mittels eines Modulators (26) mit einer Ansteuerfrequenz f und/oder einer Phasenverschiebung ϕ angesteuert werden,
wobei die Ansteuerfrequenz f und/oder eine Vorsteuergröße ϕᵥ für die Phasenverschiebung ϕ mittels einer Look-Up-Tabelle (40) ermittelt werden und
wobei der Look-Up-Tabelle (40) als Eingangsparameter eine Eingangsspannung U_{E}, eine gewünschte Ausgangsspannung U_{A} und eine Ausgangsleistung P zugeführt werden.

2. Verfahren nach Anspruch 1,
wobei die Look-Up-Tabelle (40) für verschiedene, jeweils durch eine Eingangsspannung U_{E} und die gewünschte Ausgangsspannung U_{A} bestimmte Arbeitspunkte des Serienresonanzwandlers (10) jeweils einen Datensatz (54) umfasst und wobei aus einer Mehrzahl von Datensätzen (54) anhand der Eingangsspannung U_{E} sowie der gewünschten Ausgangsspannung U_{A} genau ein Datensatz (54) ausgewählt wird.

3. Verfahren nach Anspruch 1 oder 2,
wobei mittels eines Ausgangssignals ϕ_{R} eines Ausgangsspannungsreglers (42) die auf der Vorsteuergröße ϕᵥ basierende Phasenverschiebung ϕ verändert wird und
wobei dem Ausgangsspannungsregler (42) eingangsseitig eine Differenz aus der gewünschten Ausgangsspannung U_{A} und einer tatsächlichen Ausgangsspannung U_{DC2} zugeführt wird.

4. Serienresonanzwandler (10) mit einer eingangsseitigen und einer ausgangsseitigen, jeweils Leistungshalbleiter (14,18) umfassenden Brückenschaltung (12,16) und mit einem zur Ansteuerung der Leistungshalbleiter (14,18) bestimmten Modulator (26),
wobei die Leistungshalbleiter (14,18) mittels des Modulators (26) mit einer Ansteuerfrequenz f und/oder einer Phasenverschiebung ϕ ansteuerbar sind,
wobei die Ansteuerfrequenz f und/oder eine Vorsteuergröße ϕᵥ für die Phasenverschiebung ϕ mittels einer Look-Up-Tabelle (40) ermittelbar sind und
wobei der Look-Up-Tabelle (40) als Eingangsparameter eine am Serienresonanzwandler (10) anliegende Eingangsspannung U_{E}, eine gewünschte Ausgangsspannung U_{A} und eine Ausgangsleistung P zuführbar sind.

5. Serienresonanzwandler (10) nach Anspruch 4,
wobei die Look-Up-Tabelle (40) für verschiedene, jeweils durch eine Eingangsspannung U_{E} und die gewünschte Ausgangsspannung U_{A} bestimmte Arbeitspunkte des Serienresonanzwandlers (10) jeweils einen Datensatz (54) umfasst und wobei anhand der Eingangsspannung U_{E} und der gewünschten Ausgangsspannung U_{A} aus einer Mehrzahl von Datensätzen (54) genau ein Datensatz (54) auswählbar ist.

6. Serienresonanzwandler (10) nach Anspruch 4 oder 5 und mit einem Ausgangsspannungsregler (42),
wobei mittels eines Ausgangssignals ϕ_{R} des Ausgangsspannungsreglers (42) die Phasenverschiebung ϕ veränderbar ist und wobei dem Ausgangsspannungsregler (42) eingangsseitig eine Differenz aus der gewünschten Ausgangsspannung U_{A} und einer tatsächlichen Ausgangsspannung U_{DC2} zuführbar ist.

7. Serienresonanzwandler (10) nach Anspruch 6,
wobei der mittels des Ausgangsspannungsreglers (42) veränderbaren Phasenverschiebung ϕ die mittels der Look-Up-Tabelle (40) ermittelte Vorsteuergröße ϕᵥ zugrunde liegt.

8. Serienresonanzwandler (10) nach einem der Ansprüche 4 bis 7 mit einer Implementation der Look-Up-Tabelle (40) in Soft- und/oder Firmware.

9. Serienresonanzwandler (10) nach Anspruch 8,
mit einem Speicher (58), welcher elektronisch auslesbare Steuersignale umfasst, die bei einer Ausführung mittels einer von dem Serienresonanzwandler (10) umfassten Verarbeitungseinheit diese veranlassen, das Verfahren nach einem der Ansprüche 1 bis 3 auszuführen.
